# EUROPÄISCHE PATENTSCHRIFT

(11) **EP 0 943 546 B1**
(45) Veröffentlichungstag und Bekanntmachung des Hinweises auf die Patenterteilung: **03.07.2002**
(21) Anmeldenummer: 99104168.2
(22) Anmeldetag: 02.03.1999
(51) Int. Cl.: B65B 43/52, B65B 57/04

(54) **Verfahren und Vorrichtung zum Einbringen von Gegenständen in eine bewegte, umlaufende Transporteinrichtung**
Method and device for introducing objects in a moving, circulating conveyor
Procédé et dispositif pour introduire des objets dans un convoyeur circulant en mouvement

(30) Priorität: 20.03.1998 DE 19812248
(43) Veröffentlichungstag der Anmeldung: 22.09.1999
(73) Patentinhaber: Rovema Verpackungsmaschinen GmbH, 35463 Fernwald (DE)
(72) Erfinder: Kammler, Roman Dr., 67547 Worms (DE); Baur, Walter Dr., 63584 Gründau (DE)

(56) Entgegenhaltungen:
- DE-A- 4 114 553
- FR-A- 2 276 990
- US-A- 5 419 099

## Beschreibung

Die Erfindung betrifft zum einen ein Verfahren zum Einbringen von Gegenständen, insbesondere Beutel, in eine bewegte, umlaufende Transporteinrichtung, wobei die Transporteinrichtung ohne Stillstand weiterbewegt wird, und die Gegenstände in vorgesehene Räume der Transporteinrichtung eingebracht werden. Zum anderen betrifft die Erfindung eine entsprechende Vorrichtung zum Einbringen von Gegenständen.

Es ist bekannt, Gegenstände in hintereinander befindliche, quer zur Transportrichtung begrenzte Räume einer mit konstanter Geschwindigkeit bewegten, umlaufenden Transport einzubringen. Dazu werden die Gegenstände zunächst mittels eines parallel zur Transporteinrichtung verlaufenden Beschleunigungsbandes auf die gleiche Geschwindigkeit wie die Transporteinrichtung beschleunigt und dann in horizontaler Richtung nacheinander in die Räume geschoben.

Dokument FR 2 276 990A offenbart eine mit konstanter Geschwindigkeit bewegte Transporteinrichtung.

Des weiteren ist bekannt, eine Transporteinrichtung intermittierend zu betreiben und bei jedem Stillstand der Transporteinrichtung einen Gegenstand in einen dafür vorgesehenen Raum der Transporteinrichtung zu schieben oder von oben dort hineinfallen zu lassen.

Dokument US 5 419 099A offenbart eine intermittierend betriebene Transporteinrichtung.

Die bekannte, mit konstanter Geschwindigkeit bewegte Transporteinrichtung hat den Nachteil, daß der technische Aufwand für eine Beschleunigung der Gegenstände auf die Geschwindigkeit der Transporteinrichtung relativ groß ist, und daß deshalb derartige Vorrichtungen relativ teuer sind.

Die bekannte, intermittierend arbeitende Transporteinrichtung hat den Nachteil, daß infolge der Stillstandszeiten der Transporteinrichtung nur eine relativ geringe Transportleistung erzielt werden kann.

Der Erfindung liegt die Aufgabe zu Grunde, bei einem Verfahren und einer Vorrichtung der eingangs beschriebenen Art eine relativ hohe Transportleistung zu erreichen. Die Vorrichtung soll zudem kostengünstig sein und einen relativ geringen Verschleiß aufweisen.

Gelöst ist die Aufgabe entsprechend den kennzeichnenden Teilen der Ansprüche 1 und 9.

Bei dem erfindungsgemäßen Verfahren (Anspruch 1) ist die Geschwindigkeit einer ohne Stillstand weiterbewegten während eines Einbringvorganges geringer als die Geschwindigkeit der Transporteinrichtung außerhalb eines Einbringvorganges.

Die erfindungsgemäße Vorrichtung (Anspruch 9) weist eine ohne Stillstand umlaufende Transporteinrichtung auf, deren Antrieb mit einer Steuereinrichtung verbunden ist, welche in Abhängigkeit eines Einbringzeitpunktes die Transporteinrichtung verzögert, und in Abhängigkeit eines weiteren Einbringzeitpunktes die Transporteinrichtung wieder beschleunigt.

Das erfindungsgemäße Verfahren und die erfindungsgemäße Vorrichtung haben den Vorteil, daß eine relativ hohe Transportleistung erreicht wird, da Stillstandszeiten bei Betrieb der Vorrichtung nicht vorkommen, und die Transporteinrichtung jeweils nur während eines Einbringvorganges mit einer verringerten Geschwindigkeit betrieben wird.

Die Gegenstandseinbringung erfolgt in kostengünstiger Weise, da keine auf die Geschwindigkeit der Transporteinrichtung beschleunigten Gegenstände verlangt werden. Eine derartige Beschleunigungseinrichtung entfällt. Die Steuereinrichtung kann auf eine zusätzliche Programmierung einer bereits vorhandenen Steuerung reduziert werden und ist prinzipiell kostengünstiger als eine separate Beschleunigungseinrichtung.

Die Erfindung erlaubt einen relativ geringen Verschleiß der Vorrichtung, da Haftreibungen, wie sie bei Stillstand einer Vorrichtung vorkommen würden, vermieden werden. Dadurch werden die notwendigen Antriebskräfte verringert, ein leistungsschwächerer, kostengünstigerer Antrieb kann vorgesehen werden. Die Bauteile der Vorrichtung werden kleineren Verschleißkräften ausgesetzt. Zur Vermeidung eines erhöhten Verschleißes und für den Einsatz eines relativ leistungsschwachen Antriebs ist es möglich, die Transporteinrichtung derart langsam zu bewegen, daß gerade kein Stillstand der Transporteinrichtung vorkommt. Ein besonders langsamer Betrieb während eines Einbringvorganges hat zudem den Vorteil, daß die Gegenstände in relativ enge Räume eingebracht werden können, wobei die äußere Abmessung eines Gegenstandes in Transportrichtung nur unwesentlich kleiner als die innere Abmessung eines Raumes in dieser Richtung sein kann, d. h., es wird ein relativ passgenaues Einbringen erreicht.

Weitere, vorteilhafte Ausgestaltungen der Erfindung sind in den Ansprüchen 2 bis 8 und 10 bis 17 beschrieben.

Ist die Einbringgeschwindigkeit der Gegenstände in die Räume mindestens zehnmal größer als die Transportgeschwindigkeit der Transporteinrichtung (Anspruch 2), so wird eine zuverlässige Einbringung in relativ passgenaue Räume erreicht.

Weisen die Gegenstände direkt vor dem Einschiebe- bzw. Einbringvorgang eine parallel zur Transporgeschwindigkeit ausgerichtete Geschwindigkeitskomponente auf (Anspruch 8), z. B. durch einen kurzzeitigen Kraftstoß auf die Gegenstände parallel zur Transportrichtung, so können maximale Einbringgeschwindigkeiten erreicht werden.

Die Gegenstände können in horizontaler Richtung (Anspruch 3) oder in vertikaler Richtung nach unten (Anspruch 4) in die Räume eingebracht werden. Eine horizontale Einbringung ist sehr zeitgenau mittels eines Schiebers möglich. Bei einer vertikalen Einbringung kann die Gravitation (Anspruch 5) genutzt werden, um eine relativ große Einbringgeschwindigkeit zu erreichen.

Die Gegenstände können aber auch mit einer definierten Anfangsgeschwindigkeit in die Räume abgeworfen werden (Anspruch 6). Dies hat den Vorteil, daß ein kurzer Einbringweg realisiert werden kann.

Als Einrichtung zum Einbringen eignen sich zwei gegenläufig umlaufende, einen Gegenstand zwischen sich aufnehmende Riemen (Anspruch 10). Die Riemen halten einen Gegenstand und geben ihn zu einem vom ersten Einbringzeitpunkt abhängigen Zeitpunkt an einen Raum ab. Ist der Abstand zwischen den Riemen veränderbar (Anspruch 11), so können unterschiedlich breite Gegenstände von dieser Einrichtung eingebracht werden.

Als Einrichtung zum Einbringen kann auch eine vertikale Schlauchbeutelmaschine mit D-förmig umlaufenden Quersiegelbacken vorgesehen sein (Anspruch 16). Bei dieser Einrichtung können von der Schlauchbeutelmaschine gefertigte Beutel mit genau vorgegebener Abwurfgeschwindigkeit in kostengünstiger Weise direkt in die Räume eingebracht werden. Eine zusätzliche Einrichtung zum Einbringen entfällt gänzlich. Die Schlauchbeutel werden entlang eines geraden Weges der D-förmigen Backenbahn mit besonders genau vorgegebener Geschwindigkeit nach unten abgegeben.

Ist die Transporteinrichtung Teil eines Kartonierers (Anspruch 12), so können in vorteilhafter Weise Beutel in Kartons eingebracht werden. Die Kartons befinden sich in geöffnetem Zustand in den Räumen und werden in erfindungsgemäßer Weise mit Beuteln versehen. Ist die Transporteinrichtung ein Becherband (Anspruch 13), so bilden die Becher des Becherbandes die Räume.

Eine besonders hohe Positioniergenauigkeit ist möglich, wenn das Trägheitsmoment und die Längendehnung der Transporteinrichtung relativ niedrig sind. Dies wird erreicht, wenn als Transporteinrichtung ein umlaufender Zahnriemen mit äquidistant am Zahnriemen angeordneten Mitnehmem vorgesehen ist, und die Mitnehmer aus einem Leichtmetall, insbesondere einer Magnesiumlegierung bestehen (Anspruch 14). Ein Zahnriemen erfährt nach einer gewissen Betriebsdauer eine deutlich geringere Längendehnung als z. B. eine Transportkette. Durch das vergleichsweise geringe Gewicht ist der Zahnriemen mitsamt den Mitnehmern deutlich genauer positionierbar und es kann ein vergleichsweise leistungsschwächerer Antrieb, der wegen seiner guten Positionierbarkeit ein Servomotor sein sollte, verwendet werden.

Ist ein Sensor zum Erkennen eines zu befüllenden Raumes vorgesehen, und ist der Sensor mit der Steuereinrichtung verbunden (Anspruch 15), so kann ein erster Einbringzeitpunkt durch die Heranführung eines Raumes vom Sensor vorgegeben werden.

Ein besonders günstiger Einbringvorgang wird erreicht, wenn zusätzlich zu dem Einbringen bei verzögerter Transporteinrichtung die Räume vor einem Einbringvorgang vergrößert und nach dem Einbringvorgang wieder verkleinert werden (Anspruch 7, Anspruch 17). Dadurch wird ein relativ enges Einbringen vermieden und der Einbringvorgang ist viel sicherer. Das Verzögern der Transporteinrichtung und die Raumvergrößerung ergänzen sich in idealer Weise für einen Einbringvorgang.

Im folgenden wird die Erfindung an Hand von Ausführungsbeispiele darstellenden Figuren näher beschrieben. Es zeigt:
- Figur 1: in einer Draufsicht eine Transporteinrichtung mit zwei gegenläufig angetriebenen Zahnriemen, wobei an jedem Zahnriemen Mitnehmer angebracht sind, mit zwischen Mitnehmern befindlichen Gegenständen, und mit einer Steuereinrichtung, die mit den Antrieben der Transporteinrichtung verbunden ist;
- Figur 2: in einer Seitenansicht auf einer Transporteinrichtung transportierte, oben offene Faltschachteln, in die Schlauchbeutel eingebracht werden sollen;
- Figur 3: in einem Diagramm die Geschwindigkeit einer Transporteinrichtung in Abhängigkeit der Zeit;
- Figur 4: in einer Seitenansicht einen von einer Schlauchbeutelmaschine gespendeten Schlauchbeutel, der in eine bewegte Faltschachtel eingebracht werden soll;
- Figur 5: in einer Seitenansicht einen von zwei umlaufenden Riemen gehaltenen, befüllten Schlauchbeutel, der in einen Raum eines Becherbandes eingebracht werden soll, sowie
- Figur 6: in einer Seitenansicht einem von einer Schlauchbeutelmaschine mit entlang D-Kurven umlaufenden Quersiegelbacken abgegebenen Schlauchbeutel, der in eine vorbeibewegte Faltschachtel eingebracht wird.

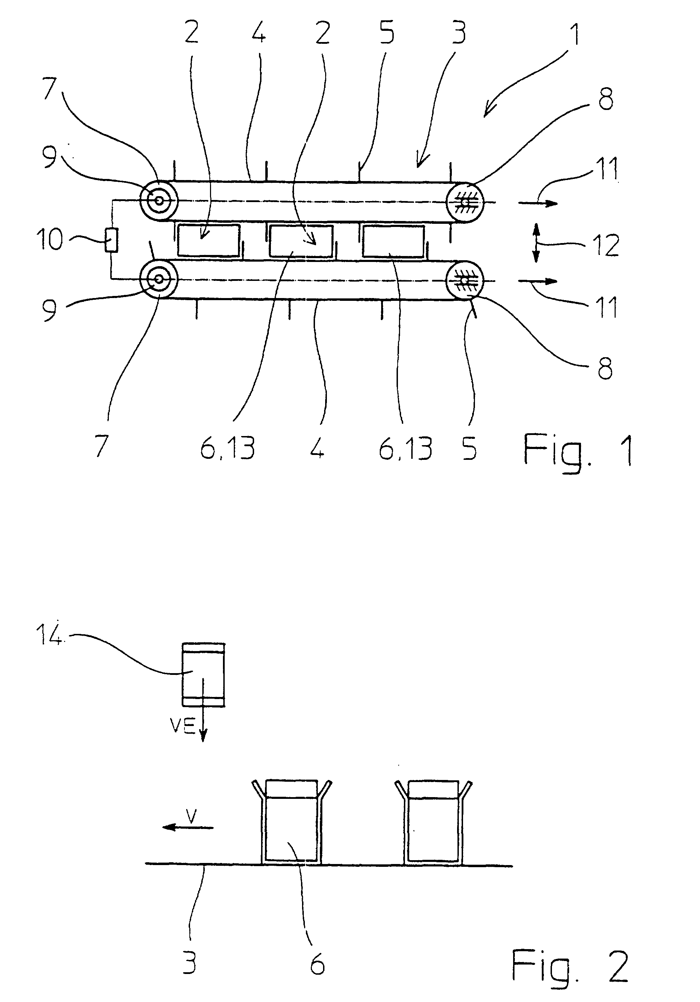

Bei einer Vorrichtung 1 zum Einbringen von Schlauchbeuteln in Räume 2 läuft eine Transporteinrichtung 3 ohne Stillstand um (Figur 1). Die Transporteinrichtung 3 enthält zwei geschlossene Zahnriemen 4 mit äquidistant an den Zahnriemen 4 angeordneten Mitnehmem 5. Die Mitnehmer 5 bestehen aus einer Magnesiumlegierung und sind deshalb relativ leicht. Die Transporteinrichtung 3 hat ein relativ geringes Massenträgheitsmoment und kann somit in sehr kurzer Zeit auf eine höhere oder niedrigere Umlaufgeschwindigkeit gebracht werden.

Zwischen jeweils zwei Mitnehmem 5 wird eine oben offene Faltschachtel 6 transportiert, in deren inneren Raum 2 ein Schlauchbeutel eingebracht werden soll.

Die Zahnriemen 4 laufen um Zahnräder 7, 8 um. Die Zahnräder 7 werden von Antrieben 9 gegenläufig angetrieben. Die Antriebe 9 sind mit einer Steuereinrichtung 10 verbunden. Die Steuereinrichtung 10 sorgt dafür, daß die Antriebe 9 in Abhängigkeit eines Einbringzeitpunktes die Transporteinrichtung 3 verzögern, so daß ein Schlauchbeutel bei reduzierter Transportgeschwindigkeit in eine Faltschachtel 6 eingebracht werden kann. Nach zumindest einem teilweisen Einbringen des Schlauchbeutels in die Faltschachtel 6 zu einem bestimmten Einbringzeitpunkt wird durch ein weiteres Signal der Steuereinrichtung 10 die Transporteinrichtung 3 wieder beschleunigt. Dadurch ist die Geschwindigkeit der Transporteinrichtung 3 während eines Einbringvorganges geringer als die Geschwindigkeit der Transporteinrichtung außerhalb eines Einbringvorganges. Die Schlauchbeutel können sicher eingebracht werden, und die Transporteinrichtung hat eine relativ hohe Transportleistung. Dadurch, daß kein Stillstand der Transporteinrichtung 3 vorkommt, wird ein Anfahren aus einem Stillstand vermieden, und die Antriebe 9, die Servomotoren sind, können relativ leistungsarm und damit kostengünstig sein.

Die Steuereinrichtung 10 könnte auch zusätzlich zu der Reduzierung der Transportgeschwindigkeit für eine Vergrößerung der Räume 2 vor einem Einbringen der Faltschachteln 6 in die Räume 2 und für eine Vergrößerung der Räume 2 nach einem erfolgten Einbringvorgang sorgen. Dadurch, daß die Faltschachteln 6 sowohl bei reduzierter Transportgeschwindigkeit als auch in vorübergehend vergrößerte Räume 2 eingebracht werden, ist ein sehr sicheres Einbringen auch bei sehr hoher durchschnittlicher Transportgeschwindigkeit möglich. Eine Raumveränderung erfolgt durch ein kurzzeitiges Nichtsynchronlaufen der beiden Antriebe 9.

Die Zahnräder 8 können in eine Spannrichtung 11 verstellt werden, um die Zahnriemenspannung zu verändern. Durch Versetzen der Zahnriemen 4 mitsamt den Zahnrädem 7, 8 in Richtung 12 können Gegenstände 13 mit einer anderen Breite transportiert werden.

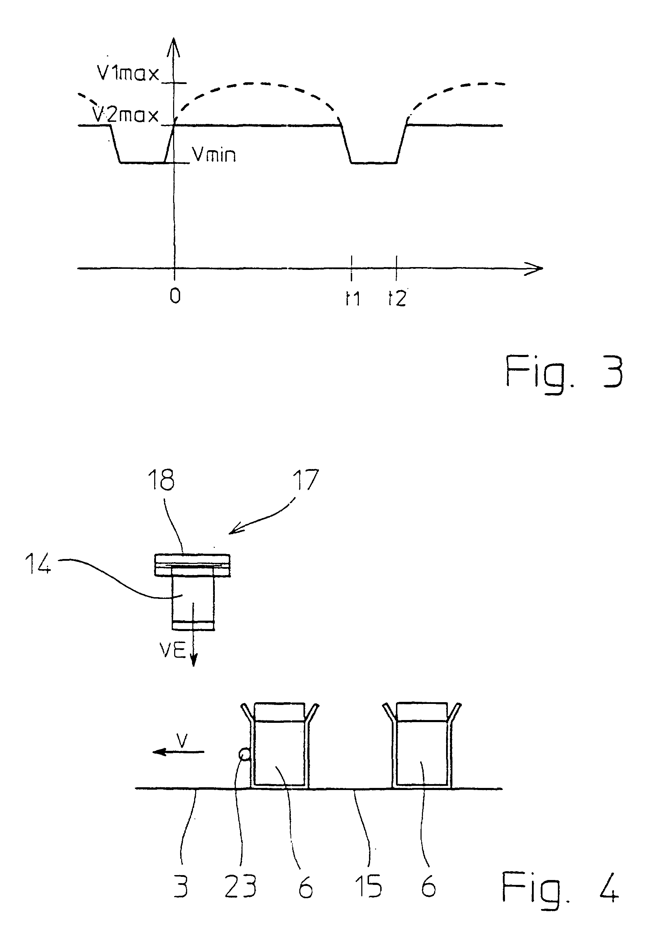

Um die Schlauchbeutel 14 in die Faltschachteln 6 zu bringen, werden die Schlauchbeutel 14 in vertikaler Richtung nach unten dem freien Fall ausgesetzt (Figur 2). Kurz vor dem Zusammentreffen von Schlauchbeutel 14 und Faltschachtel 6, zu einem Zeitpunkt t₁ (Figur 3) ist die Geschwindigkeit der Transporteinrichtung 3 auf einen minimalen Wert Vₘᵢₙ reduziert worden, um ein sicheres Einbringen des Schlauchbeutels 14 in die Faltschachtel 6 zu erreichen. Zu einem Zeitpunkt t₂, bei dem sich der Schlauchbeutel 14 bereits teilweise in der Faltschachtel 6 befindet, und nicht mehr aus dieser herausfallen kann, wird die Geschwindigkeit V der Transporteinrichtung 3 wieder auf einen Maximalwert Vₘₐₓ erhöht, um eine hohe mittlere Transportgeschwindigkeit zu erhalten. Der Wert Vₘₐₓ kann konstant über eine gewisse Zeitdauer beibehalten werden (V₂ₘₐₓ) oder stetig erreicht werden (V₁ₘₐₓ). Dadurch, daß die Einbringgeschwindigkeit V_{E} des Schlauchbeutels mindestens zehnmal größer als die Transportgeschwindigkeit Vₘᵢₙ der Transporteinrichtung 3 ist, erfolgt ein sicheres Einbringen. Dieses Verhältnis wird durch geeignete Wahl der Fallhöhe des Schlauchbeutels 14 und der Geschwindigkeitsabsenkung der Transporteinrichtung auf den Wert Vₘᵢₙ erreicht.

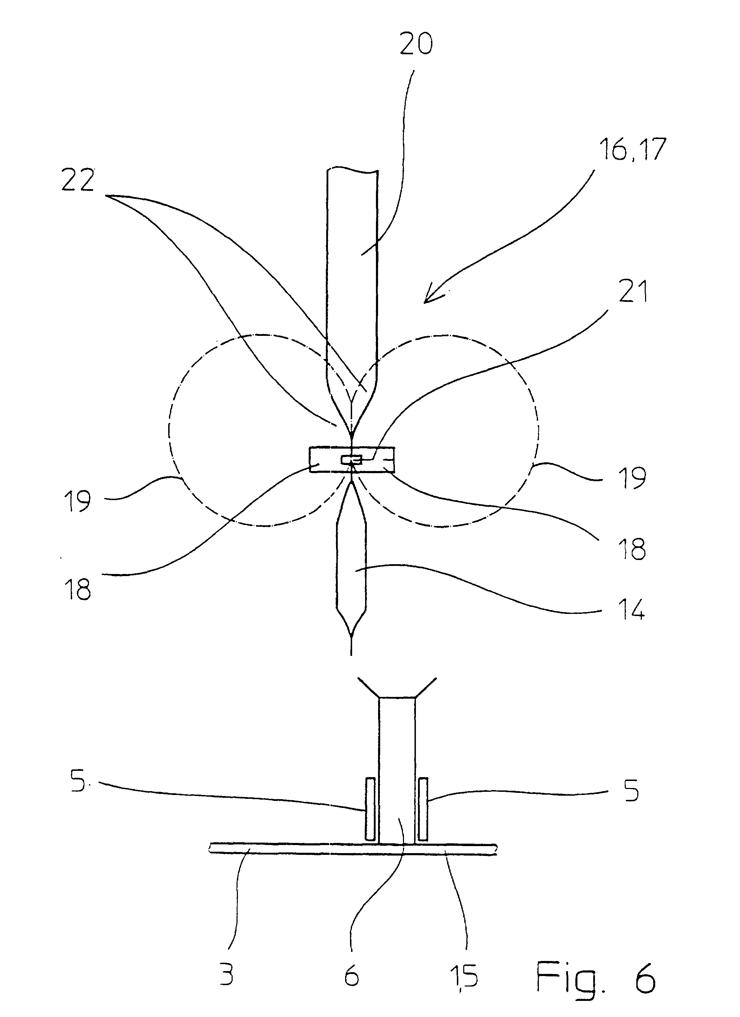

Bei dem Ausführungsbeispiel nach Figur 4 wird ein Schlauchbeutel 14 mit einer definierten Anfangsgeschwindigkeit V_{E} von einer Quersiegelbacke 18 einer vertikalen Schlauchbeutelmaschine 16 (Figur 6) nach unten abgeworfen, um in eine vorbeibewegte Faltschachtel 6 zu gelangen. Die Schlauchbeutelmaschine 16 ist als Einrichtung (17) zum Einbringen vorgesehen und weist gegenläufige Quersiegelbacken 18 auf, die entlang eines geraden Abschnitts 22 einer D-Kurve (19) einen Folienschlauch 20 quer verschweißen und mittels einer Trenneinrichtung 21 einen Schlauchbeutel 14 vom Folienschlauch 20 abtrennen. Infolge einer konstanten Abwärtsgeschwindigkeit von Folienschlauch 20 und Quersiegelbacken 18 entlang des geraden Abschnitts 22 ist die Einbringgeschwindigkeit V_{E} im Zeitpunkt des Beutelabwurfs genau vorgegeben. Durch den zusätzlichen freien Fall nach dem erfolgten Abwurf wird die Einbringgeschwindigkeit noch auf einen höheren Wert gebracht. Dieser höhere Wert ist mehr als zehnmal so groß wie der reduzierte Wert Vₘᵢₙ der Transporteinrichtung 3.

Ein Sensor 23 erkennt eine ankommende Faltschachtel 6, und damit deren zu befüllenden Raum 2. Der Sensor 23 ist mit der Steuereinrichtung 10 verbunden. Somit. wird der Steuereinrichtung 10 eine Information über den tatsächlichen Zeitpunkt der Heranführung einer Faltschachtel 6 gegeben, und der Beutelabwurf kann diesbezüglich geregelt werden. Die Transporteinrichtung 3 ist Teil eines Kartonierers 15.

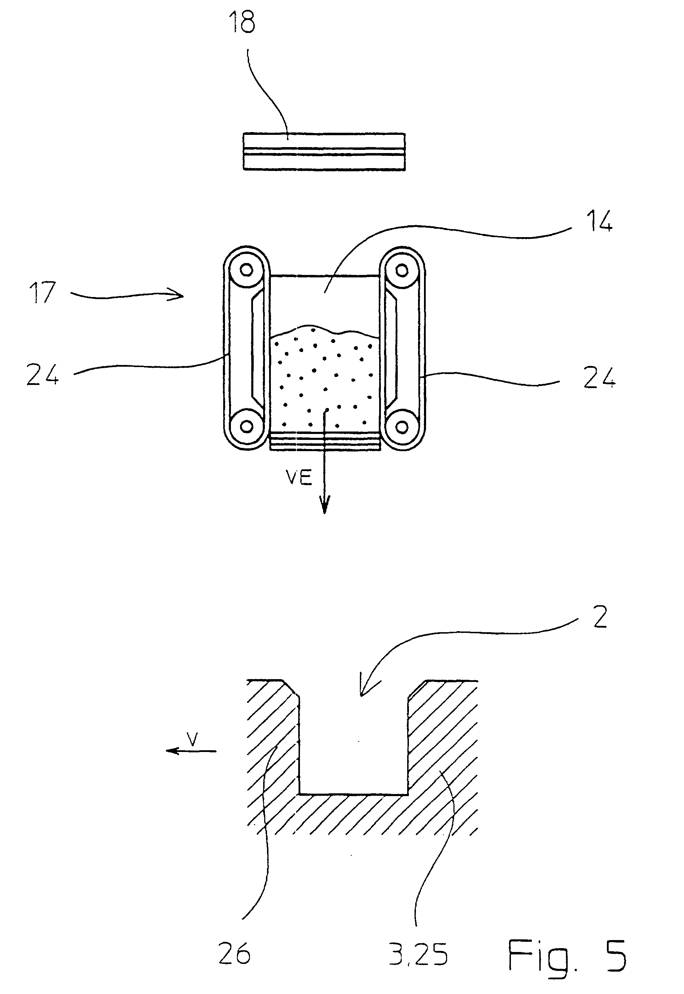

Beim Ausführungsbeispiel der Figur 5 wird ein von den Quersiegelbacken 18 einer Schlauchbeutelmaschine abgegebener Schlauchbeutel 14 nach unten an eine Einrichtung 17 zum Einbringen übergeben. Die Einrichtung 17 weist zwei gegenläufig umlaufende, den Schlauchbeutel 14 zwischen sich aufnehmende Riemen 24 auf. Der Abstand zwischen den Riemen 24 ist einstellbar, um unterschiedlich breite Schlauchbeutel einbringen zu können.

Die Transporteinrichtung 3 ist ein Becherband 25. Der Innenraum der Becher 26 ist der Raum 2, in den ein Schlauchbeutel 14 einzubringen ist.

Ein von den Quersiegelbacken 18 abgegebener Schlauchbeutel 14 wird durch die relativ hohe Umlaufgeschwindigkeit der Riemen 24 zusätzlich beschleunigt und mit sehr großer Geschwindigkeit V_{E} in den Raum 2 abgeworfen. Die Riemen 24 laufen mit konstanter Geschwindigkeit um. Sie könnten aber auch taktweise betrieben werden, wobei sie den Schlauchbeutel 14 zu einem von der Steuereinrichtung vorgegebenen Zeitpunkt abwerfen.
- 1: Vorrichtung
- 2: Raum
- 3: Transporteinrichtung
- 4: Zahnriemen
- 5: Mitnehmer
- 6: Faltschachtel
- 7,: Zahnrad
- 9: Antrieb
- 10: Steuereinrichtung
- 11: Spannrichtung
- 12: Richtung
- 13: Gegenstand
- 14: Schlauchbeutel
- 15: Kartonierer
- 16: Schlauchbeutelmaschine
- 17: Einrichtung zum Einbringen
- 18: Quersiegelbacke
- 19: D-Kurve
- 20: Folienschlauch
- 21: Trenneinrichtung
- 22: gerader Abschnitt
- 23: Sensor
- 24: Riemen
- 25: Becherband
- 26: Becher

## Patentansprüche

1. Verfahren zum Einbringen von Gegenständen, insbesondere Beutel, in eine bewegte, umlaufende Transporteinrichtung, wobei die Transporteinrichtung ohne Stillstand weiterbewegt wird, und die Gegenstände in vorgesehene Räume der Transporteinrichtung eingebracht werden, **dadurch gekennzeichnet, daß** die Geschwindigkeit der Transporteinrichtung (3) während des Einbringvorganges geringer als die Geschwindigkeit der Transporteinrichtung (3) außerhalb eines Einbringvorganges ist.

2. Verfahren nach Anspruch 1, **dadurch gekennzeichnet, daß** die Einbringgeschwindigkeit (V_{E}) der Gegenstände in die vorgesehenen Räume der Transporteinrichtung mindestens zehnmal größer als die Transportgeschwindigkeit (v) der Transporteinrichtung während des Einbringvorganges ist.

3. Verfahren nach Anspruch 1 oder Anspruch 2, **dadurch gekennzeichnet, daß** die Gegenstände in horizontaler Richtung in die vorgesehenen Räume der Transporteinrichtung eingeschoben werden.

4. Verfahren nach Anspruch 1 oder Anspruch 2, **dadurch gekennzeichnet, daß** die Gegenstände (13) in vertikaler Richtung nach unten in die vorgesehenen Räume der Transporteinrichtung eingebracht werden.

5. Verfahren nach Anspruch 4, **dadurch gekennzeichnet, daß** die Gegenstände (13) dem freien Fall ausgesetzt werden.

6. Verfahren nach Anspruch 4, **dadurch gekennzeichnet, daß** die Gegenstände (13) mit einer definierten Anfangsgeschwindigkeit abgeworfen werden.

7. Verfahren nach mindestens einem der vorgenannten Ansprüche, **dadurch gekennzeichnet, daß** die Räume (2) vor einem Einbringvorgang vergrößert und nach dem Einbringvorgang wieder verkleinert werden.

8. Verfahren nach Anspruch 2 oder Anspruch 3, **dadurch gekennzeichnet, daß** die Gegenstände (13) direkt vor dem Einschiebe- bzw. Einbringvorgang eine parallel zur Transportgeschwindigkeit (v) ausgerichtete Geschwindigkeitskomponente aufweisen.

9. Vorrichtung zum Einbringen von Gegenständen, insbesondere Beutel, in eine mittels eines Antriebs bewegte, umlaufende Transporteinrichtung, wobei die Transporteinrichtung ohne Stillstand umläuft, und an der Transporteinrichtung Räume zur Aufnahme der Gegenstände vorgesehen sind, **dadurch gekennzeichnet, daß** eine Steuereinrichtung (10) mit dem Antrieb (9) verbunden ist, die in Abhängigkeit eines Einbringzeitpunktes die Transporteinrichtung (3) verzögert, und in Abhängigkeit eines weiteren Einbringzeitpunktes wieder beschleunigt.

10. Vorrichtung nach Anspruch 9, **dadurch gekennzeichnet, daß** an der Transporteinrichtung (3) eine Einrichtung (17) zum Einbringen der Gegenstände (13) in die Räume (2) vorgesehen ist, und daß die Einrichtung (17) zwei gegenläufig umlaufende, einen Gegenstand (13) zwischen sich aufnehmende Riemen (24) aufweist.

11. Vorrichtung nach Anspruch 10, **dadurch gekennzeichnet, daß** der Abstand zwischen den Riemen (24) veränderbar ist.

12. Vorrichtung nach Anspruch 9, Anspruch 10 oder Anspruch 11, **dadurch gekennzeichnet, daß** die Transporteinrichtung (3) Teil eines Kartonierers (15) ist.

13. Vorrichtung nach Anspruch 9, Anspruch 10 oder Anspruch 11, **dadurch gekennzeichnet, daß** die Transporteinrichtung (3) ein Becherband (25) ist.

14. Vorrichtung nach Anspruch 9, Anspruch 12 oder Anspruch 13, **dadurch gekennzeichnet, daß** die Transporteinrichtung (3) einen umlaufenden Zahnriemen (4) mit äquidistant am Zahnriemen (4) angeordneten Mitnehmem (5) enthält, und daß die Mitnehmer aus einem Leichtmetall, insbesondere einer Magnesiumlegierung bestehen.

15. Vorrichtung nach Anspruch 9, Anspruch 12 oder Anspruch 13, **dadurch gekennzeichnet, daß** ein Sensor (23) zum Erkennen eines zu befüllenden Raumes (2) vorgesehen ist, und daß der Sensor (23) mit der Steuereinrichtung (10) verbunden ist.

16. Vorrichtung nach Anspruch 9, **dadurch gekennzeichnet, daß** an der Transporteinrichtung (3) eine Einrichtung (17) zum Einbringen vorgesehen ist, und daß die Einrichtung (17) eine vertikale Schlauchbeutelmaschine (16) mit D-förmig umlaufenden Quersiegelbacken (18) ist.

17. Vorrichtung nach mindestens einem der Ansprüche 9 bis 16, **dadurch gekennzeichnet, daß** eine Steuereinrichtung (10) vorgesehen ist, die in Abhängigkeit eines Einbringzeitpunktes die Räume (2) vergrößert und in Abhängigkeit eines weiteren Einbringzeitpunktes wieder verkleinert.

## Claims

1. A method of introducing objects, in particular bags, into a moving, circulating conveyor, wherein the conveyor is moved without stopping and the objects are introduced into spaces provided in the conveyor, **characterised in that** the velocity of the conveyor (3) during the introduction procedure is lower than the velocity of the conveyor (3) outside an introduction procedure.

2. A method according to claim 1, **characterised in that** the velocity of introduction (V_{E}) of the objects into the spaces provided in the conveyor is at least ten times greater than the transportation velocity (v) of the conveyor during the introduction procedure.

3. A method according to claim 1 or claim 2, **characterised in that** the objects are pushed horizontally into the spaces provided in the conveyor.

4. A method according to claim 1 or claim 2, **characterised in that** the objects (13) are introduced vertically downwards into the spaces provided in the conveyor.

5. A method according to claim 4, **characterised in that** the objects (13) are subjected to free fall.

6. A method according to claim 4, **characterised in that** the objects (13) are dropped with a defined initial velocity.

7. A method according to at least one of the preceding claims, **characterised in that** the spaces (2) are enlarged before an introduction procedure and reduced in size again after the introduction procedure.

8. A method according to claim 2 or claim 3, **characterised in that**, immediately before the introduction or pushing-in procedure, the objects (13) have a velocity component parallel to the transportation velocity (v).

9. A device for the introduction of objects, in particular bags, into a circulating conveyor moved by means of a drive, the conveyor circulating without stopping, and spaces for receiving the objects being provided on the conveyor, **characterised in that** a control arrangement (10) is connected to the drive (9) and decelerates the conveyor (3) as a function of a time of introduction and accelerates it again as a function of a further time of introduction.

10. A device according to claim 9, **characterised in that** an arrangement (17) for introducing the objects (13) into the spaces (2) is provided on the conveyor (3), and **in that** the arrangement (17) comprises two belts (24) circulating in opposite directions and holding an object (13) between them.

11. A device according to claim 10, **characterised in that** the distance between the belts (24) is variable.

12. A device according to claim 9, claim 10 or claim 11, **characterised in that** the conveyor (3) is part of a cartoning system (15).

13. A device according to claim 9, claim 10 or claim 11, **characterised in that** the conveyor (3) is a bucket belt (25).

14. A device according to claim 9, claim 12 or claim 13, **characterised in that** the conveyor (3) comprises a circulating toothed belt (4) with carriers (5) arranged equidistantly on the toothed belt (4), and **in that** the carriers comprise a light metal, in particular a magnesium alloy.

15. A device according to claim 9, claim 12 or claim 13, **characterised in that** a sensor (23) is provided for detecting a space (2) to be filled, and **in that** the sensor (23) is connected to the control arrangement (10).

16. A device according to claim 9, **characterised in that** an introduction arrangement (17) is provided on the conveyor (3), and **in that** the arrangement (17) is a vertical tubular-bag machine (16) with transverse sealing jaws (18) circulating in a D-shaped manner.

17. A device according to at least one of claims 9 to 16, **characterised in that** a control arrangement (10) is provided which enlarges the spaces (2) as a function of a time of introduction and reduces their size again as a function of a further time of introduction.

## Revendications

1. Procédé pour introduire des objets, en particulier des sachets, dans un dispositif de transport sans fin en mouvement, le dispositif de transport étant déplacé sans interruption, et les objets étant introduits dans des compartiments prévus du dispositif de transport, **caractérisé en ce que** la vitesse du dispositif de transport (3) pendant l'opération d'introduction est inférieure à la vitesse du dispositif de transport (3) en dehors d'une opération d'introduction.

2. Procédé selon la revendication 1, **caractérisé en ce que** la vitesse d'introduction (VE) des objets dans les compartiments prévus du dispositif de transport est au moins dix fois supérieure à la vitesse de transport (V) du dispositif de transport pendant l'opération d'introduction.

3. Procédé selon la revendication 1 ou la revendication 2, **caractérisé en ce que** les objets sont introduits dans le sens horizontal dans les compartiments prévus du dispositif de transport.

4. Procédé selon la revendication 1 ou la revendication 2, **caractérisé en ce que** les objets (13) sont introduits dans le sens vertical vers le bas dans les compartiments prévus du dispositif de transport.

5. Procédé selon la revendication 4, **caractérisé en ce que** les objets (13) sont soumis à une chute libre.

6. Procédé selon la revendication 4, **caractérisé en ce que** les objets (13) sont jetés avec une vitesse initiale définie.

7. Procédé selon au moins l'une quelconque des revendications précédentes, **caractérisé en ce que** les compartiments (2) sont agrandis avant une opération d'introduction et réduits à nouveau après cette opération.

8. Procédé selon la revendication 2 ou la revendication 3, **caractérisé en ce que** les objets (13) présentent juste avant l'opération d'introduction une composante de vitesse orientée parallèlement à la vitesse de transport (V).

9. Dispositif pour introduire des objets, en particulier des sachets, dans un dispositif de transport sans fin en mouvement au moyen d'un d'entraînement, le dispositif de transport tournant sans interruption, et des compartiments étant prévus sur le dispositif de transport pour le logement des objets, **caractérisé en ce qu'**un dispositif de commande (10) est relié à l'entraînement (9), qui retarde le dispositif de transport (3) en fonction d'un instant d'introduction et l'accélère à nouveau en fonction d'un autre instant d'introduction.

10. Dispositif selon la revendication 9, **caractérisé en ce qu'**il est prévu sur le dispositif de transport (3) un dispositif (17) pour l'introduction des objets (13) dans les compartiments (2) et **en ce que** le dispositif (17) présente deux courroies 24) tournant dans le sens contraire et logeant un objet (13) entre elles.

11. Dispositif selon la revendication 10, **caractérisé en ce que** l'espace entre les courroies (24) est modifiable.

12. Dispositif selon la revendication 9, la revendication 10 ou la revendication 11, **caractérisé en ce que** le dispositif de transport (3) est un élément d'une encartonneuse (15).

13. Dispositif selon la revendication 9, la revendication 10 ou la revendication 11, **caractérisé en ce que** le dispositif de transport (3) est une bande à godets (25).

14. Dispositif selon la revendication 9, la revendication 12 ou la revendication 13, **caractérisé en ce que** le dispositif de transport (3) contient une courroie crantée (4) sans fin avec des entraîneurs (5) disposés de façon équidistante sur la courroie crantée (4), et **en ce que** les entraîneurs sont à base d'un métal léger, en particulier un alliage de magnésium.

15. Dispositif selon la revendication 9, la revendication 12 ou la revendication 13, **caractérisé en ce qu'**un capteur (23) est prévu pour la détection d'un compartiment (2) à remplir, et **en ce que** les capteurs (23) sont reliés au dispositif de commande (10).

16. Dispositif selon la revendication 9, **caractérisé en ce qu'**il est prévu sur le dispositif de transport (3) un dispositif (17) pour l'introduction et **en ce que** le dispositif (17) est une ensacheuse verticale (16) avec des mâchoires de scellement vertical (18) rotatives et en forme de D.

17. Dispositif selon au moins l'une quelconque des revendications 9 à 16, **caractérisé en ce qu'**il est prévu un dispositif de commande (10) qui agrandit les compartiments (2) en fonction d'un instant d'introduction et les réduit à nouveau en fonction d'un autre moment d'introduction.
